# EUROPÄISCHE PATENTSCHRIFT

(11) **EP 3 391 167 B1**
(45) Veröffentlichungstag und Bekanntmachung des Hinweises auf die Patenterteilung: **05.08.2020**
(21) Anmeldenummer: 16809725.1
(22) Anmeldetag: 06.12.2016
(51) Int. Cl.: G05D 1/02

(54) **VERFAHREN ZUM AUTONOMEN BETRIEB EINER VERDICHTUNGSVORRICHTUNG**
METHOD FOR AUTONOMOUS OPERATION OF A COMPRESSION APPARATUS
PROCÉDÉ DE FONCTIONNEMENT AUTONOME D'UN DISPOSITIF DE COMPACTAGE

(30) Priorität: 17.12.2015 DE 102015122149
(43) Veröffentlichungstag der Anmeldung: 24.10.2018
(73) Patentinhaber: Ammann Schweiz AG, 4901 Langenthal (CH)
(72) Erfinder: HÖRSTER, Jochen, 51465 Bergisch Gladbach (DE); MALASCHEWSKI, Armin, 56581 Ehlscheid (DE); PINKERT, Mirko, 53783 Eitorf (DE)
(74) Vertreter: Bauer, Dirk
(86) Internationale Anmeldenummer: PCT/EP2016/079908
(87) Internationale Veröffentlichungsnummer: WO 2017/102444

(56) Entgegenhaltungen:
- EP-A1- 0 733 231
- DE-A1- 10 317 160
- DE-T1- 19 983 437
- GB-A- 2 124 798
- US-A- 4 600 999
- US-A1- 2004 068 352

## Beschreibung

### Einleitung

Die vorliegende Erfindung betrifft ein Verfahren zum autonomen Betrieb einer Verdichtungsvorrichtung zur Verdichtung eines Untergrundes, umfassend die folgenden Verfahrensschritte:
a) Eine zu bearbeitende Fläche des zu verdichtenden Untergrundes wird ausgewählt.
b) Die Verdichtungsvorrichtung und/oder die zu bearbeitende Fläche werden derart präpariert, dass die Verdichtungsvorrichtung zumindest in einem Autonombetrieb selbsttätig die zu bearbeitenden Fläche bearbeitet und im Zuge dessen zumindest im Wesentlichen jede Stelle der zu bearbeitenden Fläche mindestens einmal überstreicht.
c) Eine Positionsbestimmungseinrichtung wird entlang einer Strecke geführt, die zumindest einen Teil einer äußeren Grenze der zu bearbeitenden Fläche repräsentiert, wobei während der Führung der Positionsbestimmungseinrichtung entlang der Strecke mittels der Positionsbestimmungseinrichtung zumindest intermittierend Positionsdaten erfasst werden.
d) Unter Zuhilfenahme erfasster Positionsdaten der Strecke wird eine elektronische Information über die Lage der äußeren Grenze der zu bearbeitenden Fläche erzeugt.
e) Die Verdichtungsvorrichtung wird mit der elektronischen Information versorgt, sodass sie dazu befähigt wird, in ihrem Autonombetrieb selbsttätig bei einer Kollision mit der äußeren Grenze ihre Fahrtrichtung derart anzupassen, dass sie zumindest im Wesentlichen auf der zu bearbeitenden Fläche verbleibt.

Unter einer "Verdichtungsvorrichtung" wird im Sinne der vorliegenden Anmeldung jede Art von Vorrichtung verstanden, die dazu geeignet ist, einen Untergrund zu verdichten. Die Verdichtung eines Untergrundes ist insbesondere im Bauwesen von Bedeutung. Hierbei kommt es nämlich darauf an, dass eine nachträgliche Setzung eines Untergrundes infolge von auf dem Untergrund lastender Massen vermieden wird. Derartige Setzungen können nämlich zu einer nachträglichen Beschädigung eines jeweiligen Bauwerks führen, das auf dem Untergrund errichtet wird. Dies ist sowohl im Straßenbau als auch im Hochbau zu berücksichtigen. Bei Verdichtungsvorrichtungen handelt es sich in aller Regel um vibrierende Geräte, die eine vergleichsweise große Masse aufweisen. Durch die kombinierte Wirkung von Vibration und Gewichtskraft der jeweiligen Verdichtungsvorrichtung wird die Verdichtungsleistung erbracht. Diese besteht darin, dass einzelne Teilchen bzw. Partikel des jeweiligen Untergrundes "zusammengedrückt" werden und auf diese Weise einem nachträglichen Zusammendrücken der Teilchen zuvorgekommen wird.

Das "Präparieren" bezeichnet im Sinne der vorliegenden Anmeldung eine Art von Vorbereitung, die entweder die Verdichtungsvorrichtung oder die jeweilig zu bearbeitende Fläche des Untergrundes oder beides betrifft. Das Präparieren kann beispielsweise darin bestehen, die zu bearbeitende Fläche mit Begrenzungselementen zu versehen, die der Verdichtungsvorrichtung eine Grenze der zu bearbeitenden Fläche aufgeben.

Der Begriff "Autonombetrieb" bezeichnet im Sinne der vorliegenden Anmeldung einen Betriebsmodus der Verdichtungsvorrichtung, in dem diese zumindest zeitweise ohne den Einfluss einer die Verdichtungsvorrichtung führenden Person arbeiten kann. Insbesondere kann die Verdichtungsvorrichtung in dem Autonombetrieb die zu bearbeitende Fläche selbsttätig befahren, sodass der Untergrund in der zu bearbeitenden Fläche verdichtet wird. Es kann auch ein solcher Betrieb einer Verdichtungsvorrichtung als Autonombetrieb im Sinne der vorliegenden Anmeldung verstanden werden, der eine periodische Überprüfung durch eine verantwortliche Person erfordert, wobei eine derartige Überprüfung insbesondere aufgrund rechtlicher Rahmenbedingungen erforderlich sein kann. Trotz einer derartigen Überprüfung kann die Verdichtungsvorrichtung ohne einen dauerhaften aktiven Einfluss eines Maschinenführers die Bearbeitung der jeweiligen Fläche vornehmen.

Unter einer "Stelle" der zu bearbeitenden Fläche ist vorliegend gewissermaßen eine Teilfläche der zu bearbeitenden Fläche zu verstehen, nicht jedoch eine Stelle im rein mathematischen Sinne. Somit ist es beispielsweise denkbar, dass eine fertig bearbeitete Fläche als vollständig bearbeitet angesehen wird, das heißt sämtliche Stellen dieser zu bearbeitenden Fläche als Überstrichen aufgefasst werden, obwohl womöglich einzelne Punkte von vernachlässigbare Größe, beispielsweise im Bereich weniger Quadratzentimeter, nicht mittels der Verdichtungsvorrichtung überstrichen wurden. Von einer unbearbeiteten Stelle kann folglich nur dann gesprochen werden, wenn ein nicht vernachlässigbarer Flächenanteil der zu bearbeitenden Fläche trotz Abschluss des Verfahrens nicht ein einziges Mal mittels der Verdichtungsvorrichtung überstrichen wurde. Ob eine jeweilige Stelle vernachlässigbar ist oder nicht ist insbesondere von einer individuellen Bausituation bzw. dem jeweiligen Bestimmungszweck der zu bearbeitenden Fläche abhängig. Beispielsweise kann im Hochbau eine nicht bearbeitete Teilfläche von wenigen Quadratmetern nicht vernachlässigt werden. In einem solchen Fall würde zu bearbeitende Fläche als nicht vollständig bearbeitet und folglich nicht jede Stelle der zu bearbeitenden Fläche als "mindestens einmal überstrichen" im Sinne der vorliegenden Anmeldung angesehen werden.

Unter "Positionsdaten" können im Sinne der vorliegenden Anmeldung sowohl absolute als auch relative Positionsdaten verstanden werden. Bei absoluten Positionsdaten handelt es sich um solchem, die global betrachtet eindeutig sind, beispielsweise in Form eines Längengrades, eines Breitengrades und einer Höhe. Demgegenüber beziehen sich die relativen Positionsdaten auf einen lokalen Bezugspunkt, beispielsweise einen Punkt nahe der zu bearbeitenden Fläche. Die erfassten Positionsdaten können beispielsweise kartesisch oder radial formuliert sein. Für die Erfassung der äußeren Grenze der zu bearbeitenden Fläche können beide Arten von Positionsdaten hilfreich sein, wobei bevorzugt absolute Positionsdaten zum Einsatz kommen, da hierfür keine zusätzliche relative Referenz erforderlich ist.

Im Zuge der Erzeugung der elektronischen Information, die die Lage der äußeren Grenze der zu bearbeitenden Fläche beschreibt, ist es nicht entscheidend, ob diese gleichzeitig mit der Erfassung der Positionsdaten oder erst nach Abschluss derselben stattfindet. Die elektronische Information kann beispielsweise in Form einer elektronischen Datei vorliegen, die in einem geeigneten, für eine bestimmte Softwareanwendung verständlichen Format vorliegt.

Hinsichtlich des "Verbleibens der Verdichtungsvorrichtung auf der zu bearbeitenden Fläche" ist es grundsätzlich unschädlich für den Erfolg des erfindungsgemäßen Verfahrens, falls die Verdichtungsvorrichtung bei Kollision mit der äußeren Grenze nicht unmittelbar eine Änderung ihrer Fahrtrichtung ausführt, sondern womöglich die äußere Grenze zumindest um ein gewisses Maß überfährt. Dies kann beispielsweise der Fall sein, falls die Verdichtungsvorrichtung im Zuge der Änderung ihrer Fahrtrichtung "versehentlich" die äußere Grenze der zu bearbeitenden Fläche übertritt.

Hierbei ist zu bedenken, dass es sich bei der Verdichtungsvorrichtung beispielsweise um eine typische Rüttelplatte halten kann, deren Fortbewegung einzig und allein aufgrund asymmetrisch schwingender Massen erfolgt. Hieraus ergibt sich, dass eine Lenkung einer derartigen Rüttelplatte nicht in derselben präzisen Art und Weise möglich ist, wie dies beispielsweise bei einer auf Rädern geführten Vorrichtung denkbar ist. Eine Ungenauigkeit in der Bewegung einer derartigen Verdichtungsvorrichtung kann mithin beispielsweise zu einem prinzipiell unerwünschten, jedoch gleichwohl vernachlässigbaren, Übertritt der äußeren Grenze der zu bearbeitenden Fläche führen. Für das erfindungsgemäße Verfahren ist ein derartiger Übertritt unschädlich. Insbesondere sollte darauf geachtet werden, dass ein Übertritt der Verdichtungsvorrichtung über die äußere Grenze maximal um ein solches Maß stattfindet, das der längsten Abmessung der Verdichtungsvorrichtung selbst entspricht. Mit anderen Worten sollte beispielsweise bei einer Rüttelplatte, deren längste Abmessung ihre Länge von 1,5 m ist, die äußere Grenze um nicht mehr als 1,5 m übertreten. Im Sinne der vorliegenden Anmeldung wäre diese Verdichtungsvorrichtung bei Vorliegen ihres maximalen Übertritts als noch "im Wesentlichen auf der zu bearbeitenden Fläche verblieben" anzusehen.

Unter einer "Positionsbestimmungseinrichtung" wird im Sinne der vorliegenden Anmeldung jede Art von Einrichtung verstanden, die dazu geeignet ist, eine relative oder absolute Position zu erfassen. Eine derartige Positionsbestimmungseinrichtung kann beispielsweise von einem GPS Modul gebildet sein. Ferner kann eine Positionsbestimmungseinrichtung über Lagesensoren, eine elektrischen Kompass, optische Sensoren, Ultraschallsensoren oder dergleichen verfügen. Insbesondere letztgenannte Sensortypen sind dazu geeignet, eine relative Position der Verdichtungsvorrichtung zu ermitteln, die sich beispielsweise an einem Untergrund, an Fixpunkten oder dergleichen orientiert.

Typischerweise wird mittels der Positionsbestimmungseinrichtung eine in sich geschlossene Kurve erfasst, die sodann die äußere Grenze der zu bearbeitenden Fläche darstellt. Die äußere Grenze ist in diesem Fall vollständig von einer Strecke gebildet, die mittels der Positionsbestimmungseinrichtung erfasst wird. Ebenso ist es vorstellbar, dass zumindest ein Teil der äußeren Grenze der zu bearbeitenden Fläche bereits baulich begrenzt ist, beispielsweise durch ein angrenzendes Gebäude. Ein solcher Abschnitt der zu bearbeitenden Fläche muss zumindest nicht zwingend Teil der Strecke sein, die mittels der Positionsbestimmungseinrichtung erfasst wird. Insbesondere ist es der Verdichtungsvorrichtung in ihrem Autonombetrieb möglich, eine derartige bauliche äußere Grenze bzw. einen Teil derselben dadurch zu berücksichtigen, dass die Verdichtungsvorrichtung an diesen baulichen Teil der äußeren Grenze "anstößt" oder mittels entsprechender Sensoren das jeweilige Hindernis registriert. Eine elektronische Information über die Lage der äußeren Grenze ist in einem solchen Abschnitt bzw. Teil derselben nicht zwingend erforderlich. Entsprechend kann es je nach Einbausituation hinreichend sein, lediglich einen Teil der äußeren Grenze mittels der Positionsbestimmungseinrichtung zu erfassen.

Eine "intermittierende Erfassung" von Positionsdaten kann beispielsweise darin bestehen, dass letztere in bestimmten diskreten Zeitintervallen, beispielsweise im Sekundentakt, erfasst werden. Ebenso ist es denkbar, dass ein Erfassungszeitpunkt, zu dem eine aktuelle Position der Positionsbestimmungseinrichtung erfasst wird, manuell bestimmt wird, beispielsweise durch Betätigen eines entsprechenden Auslöseschalters.

Die Erzeugung einer "elektronischen Information" auf Basis der erfassten Positionsdaten kann beispielsweise darin bestehen, dass einzelne Positionsdaten, die gewissermaßen in Form von Datenpunkten vorliegen, durch Verbinden der einzelnen Datenpunkte in eine virtuelle Strecke überführt werden, die sodann die äußere Grenze der zu bearbeitenden Fläche beschreibt. Beispielsweise ist es denkbar, dass aus einer Menge erfasster Fixpunkte entlang der jeweiligen Strecke ein Polygonzug erzeugt wird, der sodann der äußeren Grenze der zu bearbeitenden Fläche entspricht. Ebenso ist es denkbar, dass die erfassten Positionsdaten manuell manipuliert werden, wodurch die elektronische Information erzeugt wird.

Das "Versorgen" der Verdichtungsvorrichtung mit der elektronischen Information umfasst sowohl eine elektronische als auch eine mechanische Versorgung. Somit ist es beispielsweise denkbar, die elektronische Information auf einen Datenspeicher der Verdichtungsvorrichtung zu übertragen, wobei die Verdichtungsvorrichtung mittels einer integrierten Datenverarbeitungsanlage in der Lage ist, die auf dem Datenspeicher hinterlegte elektronische Information zu verarbeiten und schließlich auf ihrer Basis den Autonombetrieb aufnehmen zu können. Ebenso ist es gleichwohl denkbar, dass die elektronische Information in einer auf einem Datenspeicher gespeicherten Form der Verdichtungsvorrichtung zur Verfügung gestellt wird. Beispielsweise ist es vorstellbar, dass die elektronische Information auf einem USB Stick gespeichert ist, der an die Verdichtungsvorrichtung angeschlossen wird. Ebenso ist es vorstellbar, dass die elektronische Information unmittelbar mittels der Positionsbestimmungseinrichtung erzeugt und gespeichert wird und die Positionsbestimmungseinrichtung als solche insgesamt an die Verdichtungsvorrichtung angeschlossen wird. Auf diese Weise würde die Verdichtungsvorrichtung zeitgleich mit einer Positionsbestimmungseinrichtung und der notwendigen elektronischen Information über die Lage der äußeren Grenze der zu bearbeitenden Fläche versorgt.

Die "Kollision" der Verdichtungsvorrichtung mit der äußeren Grenze beschreibt ein Ereignis, bei dem die Verdichtungsvorrichtung die virtuell gesetzte äußere Grenze berührt. Folglich kommt es zumindest nicht in zwingender Weise zu einer mechanischen Kollision in Form eines Zusammenstoßens der Verdichtungsvorrichtung mit einem Gegenstand.

### Stand der Technik

Ein Verfahren der eingangs beschriebenen Art ist im Stand der Technik bereits bekannt. Hierzu wird zunächst auf die deutsche Offenlegungsschrift DE 10 2012 208 554 A1 verwiesen. Diese beschreibt ein Verfahren zur Planung und Durchführung von Bodenverdichtungsvorgängen, insbesondere zur Asphaltverdichtung. Das Dokument beschäftigt sich mit der Frage, auf welche Art und Weise ein bestimmter Streckenabschnitt einer zu bauenden Trasse besonders effizient mittels einer Verdichtungsvorrichtung bearbeitet werden kann. Hierzu schlägt die Schrift unter anderem vor, die Verdichtungsvorrichtung mit einem GPS Modul auszustatten, mittels dessen es der Verdichtungsvorrichtung möglich ist, Daten über ihre aktuelle Position zu erfassen.

Mittels dieser Positionsdaten ist die bekannte Verdichtungsvorrichtung ferner dazu in der Lage, eine bestimmte vorgegebene Strecke autonom abzufahren, wobei gemäß der Offenbarung lediglich ein gelegentliches Eingreifen des Bedienpersonals erforderlich ist.

Das bekannte Verfahren hat den Nachteil, dass die gesamte Strecke, die mittels der Verdichtungsvorrichtung abgefahren werden soll, im Vorfeld des Autonombetriebs der dortigen Verdichtungsvorrichtung erfasst und festgelegt werden muss, damit die Verdichtungsvorrichtung dieser Strecke folgen kann. Ein derartiges Vorgehen ist insbesondere bei großen Flächen, die bei Großbaustellen regelmäßig auftreten können, sowie bei unregelmäßigen Umrissen einer jeweiligen Fläche nachteilig, da es mit einem erheblichen Aufwand verbunden sein kann, jede Bewegung der Verdichtungsvorrichtung im Vorfeld des Autonombetriebs vollständig zu planen.

Weiterhin offenbart die DE 199 83 437 T1 ein Verfahren zur Einrichtung eines Umfangs eines von einer mobilen Maschine zu bearbeitenden Gebiets. Dieses Verfahren umfasst eine Mehrzahl von Verfahrensschritten, wobei in einem ersten Verfahrensschritt zunächst eine Umfangsstrecke des zu bearbeitenden Gebiets manuell eingelernt wird. Hierzu wird eine Positionsbestimmungseinrichtung zu verschiedenen charakteristischen Punkten einer Umfangsstrecke des zu bearbeitenden Gebiets bewegt und jeweils an den fraglichen Punkten eine Positionsabfrage vorgenommen. Auf diese Weise werden die Positionen mehrerer Punkte erfasst die nach einem Abschluss dieses Verfahrensschritts gemeinsam einen Umfang des zu bearbeitenden Gebiets definieren. Nach dem Einlernen schlägt eine Software einen bevorzugten Bearbeitungsmodus vor, das heißt einen Arbeitspfad zur Bearbeitung des nunmehr definierten Gebiets. Die Bearbeitung dieses Gebiets erfolgt sodann autonom, wobei die jeweilige Maschine mittels der Positionsbestimmungseinrichtung fortwährend ihre Position relativ zu dem zu bearbeitenden Gebiet überprüfen kann.

Das bekannte Verfahren ist insoweit als nachteilig zu betrachten, als die Erfassung der Umfangsstrecke des zu bearbeitenden Gebiets langwierig und kompliziert ist.

### Aufgabe

Der vorliegenden Anmeldung liegt mithin die Aufgabe zugrunde, ein Verfahren bereitzustellen, das gegenüber dem Stand der Technik einen geringeren Vorbereitungsaufwand für den Autonombetrieb einer Verdichtungsvorrichtung erfordert.

### Lösung

Die zugrunde liegende Aufgabe wird ausgehend von einem Verfahren der eingangs beschriebenen Art erfindungsgemäß durch die folgenden Verfahrensschritte gelöst:
f) Die Strecke wird von einer Person manuell abgeschritten, wobei die Person die Positionsbestimmungseinrichtung trägt und entlang der Strecke führt.

Unter dem "manuellen Abschreiten" ist insbesondere ein Ablaufen der jeweiligen Strecke zu verstehen, wobei die Positionsbestimmungseinrichtung von der die Strecke ablaufenden Person getragen wird.

Das erfindungsgemäße Verfahren hat viele Vorteile. Insbesondere kann die gewünschte Strecke besonders zügig und einfach erfasst werden, wobei vorzugsweise eine mobile Positionsbestimmungseinrichtung von einer die Strecke erfassenden Person entlang der Strecke getragen werden kann. Der Geschwindigkeitsvorteil gegenüber dem Stand der Technik besteht zum einen darin, dass die Verdichtungsvorrichtung als solche für den Arbeitsschritt der Erfassung der äußeren Grenze der zu bearbeitenden Fläche gar nicht erforderlich ist. Folglich entfallen beispielsweise ein Abladen der Verdichtungsvorrichtung sowie deren Aufstellen an einem Punkt der äußeren Grenze. Zum anderen besteht der Vorteil darin, dass eine Person die äußere Grenze deutlich zügiger abschreiten kann, als eine typische Verdichtungsvorrichtung diese abfahren kann. Letzteres liegt in der im Allgemeinen sehr geringen Fortbewegungsgeschwindigkeit typischer Verdichtungsvorrichtungen begründet, die bei unter 1 km/h liegt. Eine Person, die eine Positionsbestimmungseinrichtung führt, kann demgegenüber mit 3 km/h bis 5 km/h die jeweilige Strecke abschreiten.

Vorteilhafterweise wird die händisch geführte Positionsbestimmungseinrichtung nach Abschluss der Erfassung der Positionsdaten an die Verdichtungsvorrichtung angeschlossen. Wie vorstehend bereits erläutert, ist es für den autonomen Betrieb der Verdichtungsvorrichtung notwendig, dass diese über eine Positionsbestimmungseinrichtung verfügt. Geeignete Positionsbestimmungseinrichtung in, insbesondere aufwändige GPS Module, können mitunter nicht unerhebliche Investitionskosten verursachen. Daher ist es durchaus von Vorteil, eine jeweilige Positionsbestimmungseinrichtung effizient einzusetzen. Insbesondere ist es denkbar, eine Positionsbestimmungseinrichtung tragbar auszuführen und diese im Anschluss an die Erfassung der Positionsdaten der Strecke gewissermaßen an die Verdichtungsvorrichtung anzudocken und sodann während des Autonombetriebs weiter zu verwenden.

Erfindungsgemäß ist der Aufwand zur Vorbereitung der zu bearbeitenden Fläche erheblich reduziert, wobei sich versteht, dass das Verhältnis von Vorbereitungsaufwand zu Bearbeitungszeit umso günstiger ist, desto größer die zu bearbeitende Fläche und mithin desto länger die äußere Grenze dieser Fläche sind. Von besonderem Vorteil ist weiterhin, dass die Definition der zu bearbeitenden Fläche als solche keinen besonderen Aufwand erfordert; insbesondere kann ohne vorhergehende Planung die Positionsbestimmungseinrichtung gewissermaßen spontan vor Ort entlang einer beliebig festgelegten Strecke geführt werden, wodurch im Ergebnis die äußere Grenze der zu bearbeitenden Fläche definiert wird.. Die "Programmierung" der Verdichtungsvorrichtung kann demzufolge sogar mit geringsten Kenntnissen über die eigentliche Bausituation bewerkstelligt und zudem ohne Vorkenntnisse von jedermann ausgeführt werden.

Vorteilhafterweise wird im Zuge der Erzeugung der elektronischen Information auf Basis der erfassten Positionsdaten überprüft, ob die sich virtuell ergebende äußere Grenze zu bearbeitenden Fläche "geschlossen" ist. Auf diese Weise wird sichergestellt, dass die Verdichtungsvorrichtung nicht versehentlich an einer bestimmten Stelle gewissermaßen aus der zu bearbeitenden Fläche "ausbrechen kann". Eine derartige Überprüfung erhöht somit die Betriebssicherheit der Verdichtungsvorrichtung in ihrem Autonombetrieb.

Vorzugsweise ist die Strecke, entlang derer die Positionsbestimmungseinrichtung während der Erfassung der Positionsdaten geführt wird, in sich geschlossen. Dies kann selbst dann sinnvoll sein, wenn zumindest ein Teil der äußeren Grenze der zu bearbeitenden Fläche bereits aufgrund baulicher Gegebenheiten begrenzt ist und eine separate Erfassung von Positionsdaten zumindest für diesen Teil nicht zwingend notwendig wäre. Die Verarbeitung der Positionsdaten und die Erzeugung der elektronischen Information kann bei Vorliegen einer in sich geschlossenen Strecke besonders einfach erfolgen.

Vorteilhafterweise wird aus den Positionsdaten, die entlang der Strecke erhoben wurden, ein Polygonzug erzeugt. Ein solcher Polygonzug besteht aus einer Mehrzahl geradliniger Abschnitte, die sich zwischen Fixpunkten erstrecken. Die Geometrie einer solchen Strecke bzw. einer sich daraus ergebenden äußeren Grenze ist folglich vergleichsweise unkompliziert, in jedem Fall weniger komplex als eine solche äußere Grenze, die geschwungene und gekrümmte Streckenanteile beinhaltet. Eine möglichst einfache Kontur der äußeren Grenze ist später für den Autonombetrieb der Verdichtungsvorrichtung besonders vorteilhaft, damit ein Anteil an "Geradeauslauf" der Verdichtungsvorrichtung möglichst hoch ist.

Vorteilhafterweise wird eine Position der Verdichtungsvorrichtung während ihres Autonombetriebs zumindest zeitweise mittels mindestens einer Positionsbestimmungseinrichtung und mindestens eines elektrischen Kompasses bestimmt. Die Positionsbestimmungseinrichtung dient zunächst der Bestimmung der absoluten oder relativen Position der Verdichtungsvorrichtung auf der zu bearbeitenden Fläche. Der elektrische Kompass gibt zusätzlich zu der Position als solcher zudem eine Information über die Ausrichtung der Verdichtungsvorrichtung. Insbesondere kann auf Basis dieser zusätzlichen Informationen eine Aussage darüber getroffen werden, in welche Richtung die Verdichtungsvorrichtung sich bewegt bzw. orientiert ist. Somit ist beispielsweise eine Aussage darüber möglich, ob zur Anpassung der Fahrtrichtung der Verdichtungsvorrichtung eine Lenkbewegung bzw. eine Richtungsänderung nach links oder nach rechts geeignet ist. Mittels Verwendung einer Positionsbestimmungseinrichtung ohne einen elektrischen Kompasses kann eine derartige Bewegungsinformation lediglich unter Berücksichtigung vorheriger Positionsdaten getroffen werden, anhand derer sich feststellen lässt, in welche Richtung sich die Verdichtungsvorrichtung aktuell bewegt.

Für eine besonders effiziente Bearbeitung der zu bearbeitenden Fläche ist es ferner von Vorteil, wenn die Verdichtungsvorrichtung in ihrem Autonombetrieb eine bestimmte Bewegungsstruktur verwendet. Dies ist in Abgrenzung zu einer beispielsweise bei autonomen Staubsaugern oder Rasenmähern häufig zu beobachtenden zufälligen Wegfindung zu verstehen. Diese Routinen haben zwar den Vorteil, dass sie im Hinblick auf den Bewegungsalgorithmus besonders einfach implementierbar sind; sie sind jedoch für eine möglichst effiziente Bearbeitung der zu bearbeitenden Fläche nicht empfehlenswert. Insbesondere kann mittels eines strukturierten Bewegungsalgorithmus, der eine regelmäßige Bewegung der autonomen Verdichtungsvorrichtung auf der zu bearbeitenden Fläche bewirkt, letztere vergleichsweise zügig und folglich energie- und zeitsparend bearbeitet werden. Dies ist vor allem insofern von Interesse, als eine Verdichtungsvorrichtung typischerweise einen vergleichsweise hohen Verbrauch an Betriebsstoffen bei gleichzeitig vergleichsweise hohem Ausstoß von Emissionen verursacht und hohem Verschleiß unterlegen ist. Eine möglichst zügige Überstreichung sämtlicher Stellen der zu bearbeitenden Fläche ist folglich von besonderem Interesse.

Für einen strukturierten Bewegungsalgorithmus ist insbesondere ein solcher zu bevorzugen, mittels dessen die Verdichtungsvorrichtung die zu bearbeitende Fläche ringförmig überstreicht, insbesondere in einer Form von "außen nach innen". In der Praxis könnte dies beispielsweise so gestaltet werden, dass nach der Übergabe der elektronischen Information über die Lage der äußeren Grenze der zu bearbeitenden Fläche an die Verdichtungsvorrichtung der Autonombetrieb der Verdichtungsvorrichtung aktiviert wird, wobei die Verdichtungsvorrichtung zu diesem Zeitpunkt an einer beliebigen Stelle der zu bearbeitenden Fläche positioniert sein kann. Insbesondere ist es vorstellbar dass die Verdichtungsvorrichtung bereits auf oder zumindest in unmittelbarer Nähe der äußeren Grenze positioniert ist. Nach der Aktivierung des Autonombetriebs bewegt sich die Verdichtungseinrichtung in Abhängigkeit ihrer aktuellen Ausrichtung geradeaus, bis sie schließlich mit der äußeren Grenze der zu bearbeitenden Fläche erstmalig kollidiert. Daraufhin wird die Bewegungsrichtung der Verdichtungsvorrichtung vorzugsweise so geändert, dass sich selbige fortan entlang der äußeren Grenze bewegt und sodann die zu bearbeitende Fläche ringförmig bzw. schneckenförmig abfährt bis sie schließlich jede Stelle der zu bearbeitenden Fläche mindestens einmal überstrichen hat.

Alternativ ist es ebenso denkbar, die Verdichtungsvorrichtung bewusst an einer möglichst mittigen Stelle der zu bearbeitenden Fläche zu positionieren sodass die Verdichtungsvorrichtung nach Aktivierung ihres Autonombetriebs die zu bearbeitende Fläche ring- bzw. schneckenförmig von innen nach außen bearbeitet. Aufgrund der typischerweise unregelmäßigen Geometrie der zu bearbeitenden Fläche ist letztere Variante gleichwohl nicht in der gleichen Weise von Vorteil wie die Variante "von außen nach innen".

Alternativ oder zusätzlich ist es ebenso vorstellbar, dass die Verdichtungsvorrichtung in ihrem Autonombetrieb die zu bearbeitende Fläche zumindest zeitweise, vorzugsweise vollständig, streifenweise entlang zueinander paralleler Fahrstreifen bearbeitet. Bei einem solchen Bewegungsalgorithmus fährt die Verdichtungsvorrichtung nacheinander zueinander parallele Fahrstreifen ab, wobei sie immer dann umkehrt, wenn sie auf die äußere Grenze der zu bearbeitenden Fläche trifft. Dabei versteht es sich, dass die Verdichtungsvorrichtung für jeden weiteren Fahrstreifen eine relativ zu dem Fahrstreifen betrachtet seitliche Bewegung ausführen muss, um im Weiteren eine bislang unbearbeitete Fläche zu bearbeiten. Auch ist ein kombinierter Bewegungsalgorithmus vorstellbar, bei dem die Verdichtungsvorrichtung zum Beispiel zunächst eine streifenweise Bearbeitung vornimmt und später, beispielsweise auf einem Endflächenabschnitt mit unregelmäßiger Form, auf eine ringförmige Bearbeitung wechselt. Beispielsweise ist es denkbar, dass die Bearbeitungsdauer eines jeweiligen Fahrstreifens zwischen zwei Umkehrungen fortwährend ermittelt wird und bei Unterschreitung einer gewissen Mindestdauer der Bewegungsalgorithmus automatisch auf ringförmig wechselt. Die Verwendung einer streifenweisen Bearbeitung ist nämlich insbesondere dann von Interesse, wenn die Verdichtungsvorrichtung pro Streifen eine vergleichsweise weite Strecke zurücklegen kann, sodass ein häufiges Wenden bei Erreichen der äußeren Grenze der zu bearbeitenden Fläche nicht notwendig ist. Insbesondere sollten die Zeiten zur Bearbeitung eines Streifens und zum daran anschließenden Wenden in einem akzeptablen Verhältnis zueinander stehen.

Für eine besonders effiziente Bearbeitung des zu verdichtenden Untergrundes ist es weiterhin von Vorteil, wenn die Verdichtungsvorrichtung in ihrem Autonombetrieb mit einem Überlappungsmaß von mindestens 10 cm, vorzugsweise mindestens 20 cm, weiter vorzugsweise mindestens 30 cm, betrieben wird. Ein derartiges Überlappungsmaß ist insofern besonders sinnvoll, als die Bestimmung der Position der Verdichtungsvorrichtung mitunter mit einem Fehler behaftet sein kann, der beispielsweise auf eine mangelnde Genauigkeit der jeweils verwendeten Positionsbestimmungseinrichtung zurückzuführen ist. Das Vorsehen eines Überlappungsmaßes verhindert folglich, dass infolge eines jeweiligen Positionsfehlers der Verdichtungsvorrichtung Stellen der zu bearbeitenden Fläche im Zuge des Autonombetriebs gar nicht von der Verdichtungsvorrichtung überstrichen werden. Somit führt das Überlappungsmaß womöglich dazu, dass eine Mehrfachüberstreichung einiger Stellen der zu bearbeitenden Fläche stattfindet; allerdings wird gleichzeitig ein Prüf- und Kontrollaufwand der von der Verdichtungsvorrichtung selbsttätig erbrachten Verdichtungsleistung reduziert.

Zur Sicherung der Qualität des jeweils erzielten Verdichtungsergebnisses kann es zudem von besonderem Vorteil sein, wenn die Verdichtungsvorrichtung während ihres Autonombetriebs selbsttätig mindestens einen Verdichtungsparameter des Untergrundes erhebt bzw. ermittelt, wobei die Verdichtungsvorrichtung sämtliche Stellen der zu bearbeitenden Fläche, in denen der Verdichtungsparameter einen gesetzten Grenzwert nicht erreicht, mindestens ein weiteres Mal selbsttätig überstreicht. Beispielsweise ist es denkbar, dass die Verdichtungsvorrichtung mit einer Messeinrichtung versehen ist, mittels derer während des Verdichtungsbetriebs der Verdichtungsvorrichtung die Bodensteifigkeit ermittelt werden kann. Die jeweils ermittelte Bodensteifigkeit kann sodann mit einem zuvor gesetzten unteren Grenzwert der zumindest zu erreichenden Bodensteifigkeit verglichen werden, sodass die Verdichtungsvorrichtung eigenständig erkennen kann, ob die gewünschte Verdichtungsleistung bereits erbracht oder eine weitere Verdichtung des Untergrundes vonnöten ist. Sofern letzteres der Fall ist, kann die Verdichtungsvorrichtung beispielsweise sämtliche Stellen, an denen der jeweilige Verdichtungsparameter dem zuvor gesetzten Grenzwert nicht entspricht, mittels der Positionsbestimmungseinrichtung aufzeichnen und sodann zu einem späteren Zeitpunkt, insbesondere nach Abschluss einer erstmaligen vollständigen Überstreichung sämtlicher Stellen der zu bearbeitenden Fläche, zu der jeweiligen Stelle zurückkehren und diese abermals überstreichen. Auf diese Weise kann die zu bearbeitende Fläche ohne Eingreifen einer die Verdichtungsvorrichtung führenden Person entsprechend den jeweilig vorliegenden Wünschen verdichtet werden.

Für eine zuverlässige Aussage über das Vorliegen bestimmter Verdichtungsparameter ist es dabei besonders sinnvoll, diese in bestimmten Intervallen über die zu bearbeitende Fläche zu erheben. Beispielsweise ist es denkbar, dass die Erhebung eines jeweiligen Verdichtungsparameters in Abhängigkeit der Fortbewegung der Verdichtungsvorrichtung vorgenommen wird, beispielsweise alle 50 cm oder alle 10 s. Hier sind selbstverständlich auch andere Kriterien denkbar.

### Ausführungsbeispiele

Das erfindungsgemäße Verfahren ist nachfolgend anhand eines Ausführungsbeispiels, das in den Figuren dargestellt ist, näher erläutert. Es zeigen:
- Fig. 1:: Eine mittels des erfindungsgemäßen Verfahrens zu bearbeitende Fläche eines Untergrundes und
- Fig. 2:: Die Fläche gemäß Figur 1 während eines Autonombetriebs einer Verdichtungsvorrichtung.

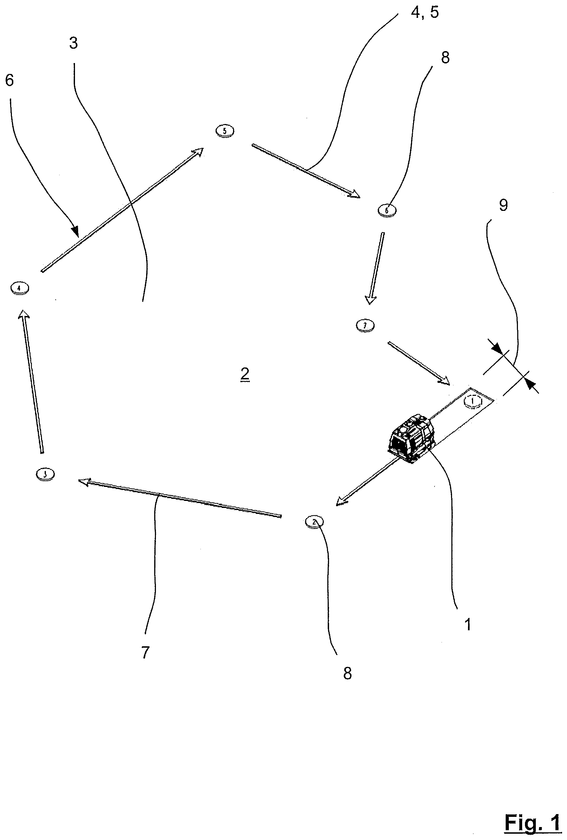

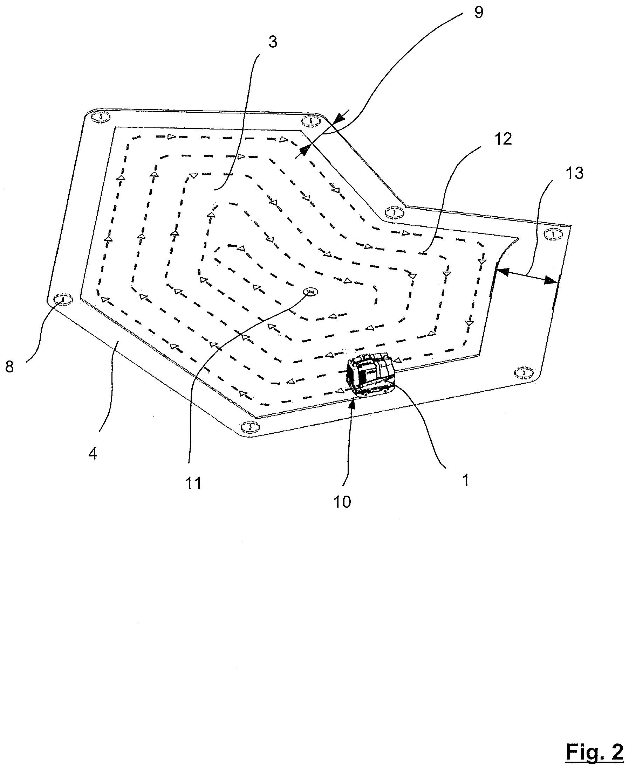

Das vorliegend beschriebene Ausführungsbeispiel, das in den **Figuren 1** **und** **2** dargestellt ist, beschreibt die Bearbeitung einer zu bearbeitenden Fläche **3,** die auf einem zu verdichtenden Untergrund **2** angeordnet ist. Die Verdichtung des Untergrundes **2** wird mittels einer Verdichtungsvorrichtung **1** vorgenommen. Bei dieser Verdichtungsvorrichtung **1** handelt es sich um eine Rüttelplatte, die eine Arbeitsbreite **9** von ca. 90 cm aufweist. In dem vorliegenden Beispiel ist die Verdichtungsvorrichtung **1** mittels einer entsprechenden Bedienungseinrichtung fernsteuerbar. Ferner ist die Verdichtungsvorrichtung 1 dazu geeignet, die zu bearbeitende Fläche **3** in einem Autonombetrieb zu bearbeiten.

Um den Autonombetrieb der Verdichtungsvorrichtung **1** zu aktivieren ist es zunächst erforderlich, Vorbereitungen durchzuführen. In dem vorliegenden Beispiel bestehen diese Vorbereitungen darin, die zu bearbeitende Fläche **3** zunächst zu definieren, in dem eine äußere Grenze **4** der zu bearbeitenden Fläche **3** festgelegt wird. Diese Festlegung erfolgt dadurch, dass eine Strecke **5,** die später der äußeren Grenze **4** entsprechen soll, "manuell" erfasst wird. Der Begriff "manuell" bedeutet in diesem Zusammenhang, dass die äußere Grenze **4** unter Mitwirkung mindestens einer Person erfasst wird; eine autonome, das heißt selbsttätige, Erfassung der äußeren Grenze **4** der zu bearbeitende Fläche **3** ist mittels der hier gezeigten Verdichtungsvorrichtung **1** nicht möglich. Gleichwohl ist auch ein solcher Schritt grundsätzlich denkbar.

Zur Festlegung der äußeren Grenze **4** wird die eine nicht dargestellte Positionsbestimmungseinrichtung von einer Person entlang der Strecke **5** geführt. Die Positionsbestimmungseinrichtung ermöglicht es, die jeweils aktuelle Position der der Person zu ermitteln. Hierzu umfasst sie in dem gezeigten Beispiel mindestens ein GPS Modul, mittels dessen Sie dazu in der Lage ist, eine globale Position der sie tragenden Person in Globalkoordinaten zu erfassen.

Im Zuge des Abschreitens der Strecke **5** werden fortwährend Positionsdaten der Positionsbestimmungseinrichtung erhoben und gespeichert.

Insbesondere werden mit der Positionsbestimmungseinrichtung charakteristische Punkte **8** entlang der Strecke **5** registriert. Dies kann beispielsweise durch manuelles Auslösen erfolgen, insbesondere indem die die Positionsbestimmungseinrichtung führende Person mittels einer manuellen Eingabe eine diskrete Speicherung einer jeweils aktuellen Position der Verdichtungsvorrichtung **1** auslöst. Alternativ oder zusätzlich ist es ebenso vorstellbar, dass die mittels der Positionsbestimmungseinrichtung erfassten Positionsdaten in festgeschriebenen Intervallen, beispielsweise einmal pro Sekunde, erhoben werden, sodass sich nach vollständigem Abschreiten der Strecke **5** ein detailliertes Bild der Strecke **5** ergibt. In dem vorliegenden Beispiel wird die beschriebene manuelle Erfassung der einzelnen Punkte **8** angewendet.

Das Abschreiten der Strecke **5** wird in dem vorliegenden Beispiel dadurch beendet, dass die Strecke **5** in sich geschlossen wird. Mit anderen Worten ergibt sich insgesamt nach Abschreiten der Strecke **5** eine in sich geschlossene Kurve. Dies ist aus den **Figuren 1** **und** **2** besonders gut erkennbar. Nach dem Abschreiten der Strecke **5** liegen nunmehr Positionsdaten der einzelnen Punkte **8** der Strecke **5** vor. Aus diesen Positionsdaten kann sodann mittels einer entsprechenden Softwareanwendung die äußere Grenze **4** der zu bearbeitenden Fläche **3** bestimmt bzw. definiert werden. Hierzu werden die einzelnen Punkte **8** der Strecke **5** untereinander mit geradlinigen Abschnitten **7** verbunden, wobei jeder der Punkte **8** jeweils lediglich mit seinen direkt benachbarten Punkten **8** verbunden wird. Durch dieses Vorgehen ergibt sich insgesamt ein Polygonzug **6** der aus einer Mehrzahl der geradlinigen Abschnitte **7** besteht, die sich zwischen den einzelnen Punkten **8** erstrecken. Dieser Polygonzug **6** stellt gewissermaßen die virtuelle äußere Grenze **4** der zu bearbeitenden Fläche 3 dar.

Wenngleich vorliegend die Verarbeitung der erfassten Positionsdaten der Strecke **5** erst nach Abschluss der Erfassung der Strecke **5** insgesamt erfolgt, ist es gleichwohl denkbar, dass die virtuelle Erzeugung des hier gezeigten Polygonzug **6** oder einer beliebigen anderen Strecke gleichzeitig zu der Erfassung der einzelnen Positionsdaten von Punkten entlang der jeweiligen Strecke erfolgt. Insbesondere ist es ebenso vorstellbar, dass einzelne Punkte entlang einer Strecke nicht mit geradlinigen Abschnitten, sondern mit nichtlinearen Abschnitten verbunden werden. Im Ergebnis sind grundsätzlich jegliche Formen von Strecken vorstellbar. Ebenso ist es vorstellbar, die einzelnen Punkte, die mittels einer Positionsbestimmungseinrichtung entlang einer jeweiligen Strecke erfasst wurden, manuell zu manipulieren und somit Punkte in die Bestimmung der jeweiligen äußeren Grenze einfließen zu lassen, die ursprünglich gar nicht unmittelbar mittels der Positionsbestimmungseinrichtung bestimmt wurden. Eine derartige manuelle Manipulation einzelner oder mehrerer Punkte einer erfassten Strecke erfolgt gleichwohl in jedem Fall unter Zuhilfenahme der jeweils erfassten Positionsdaten.

Nach der Bestimmung der äußeren Grenze **4** der zu bearbeitenden Fläche **3** kann die entsprechende elektronische Information über die Lage der äußeren Grenze **4** an die Verdichtungsvorrichtung **1** weitergegeben werden. Der Verdichtungsvorrichtung **1** liegen somit nunmehr Informationen darüber vor, an welcher Grenze bzw. an welchen Stellen die zu bearbeitende Fläche **3,** die verdichtet werden soll, beendet bzw. begrenzt ist. Dies befähigt die Verdichtungsvorrichtung **1** dazu, die zu bearbeitende Fläche **3** in einem Autonombetrieb zu bearbeiten. Insbesondere ist ein Bewegungsalgorithmus der Verdichtungsvorrichtung **1** derart konzipiert, dass sie die äußere Grenze **4** der zu bearbeitenden Fläche **3** nicht überschreitet bzw. überfährt. Sofern die Verdichtungsvorrichtung **1** folglich innerhalb der äußeren Grenze **4** positioniert ist, kann der Autonombetrieb der Verdichtungsvorrichtung **1** aktiviert werden, worauf hin letztere die zu bearbeitende Fläche **3** selbsttätig abfahren kann.

Das Abfahren der zu bearbeitenden Fläche **3** kann grundsätzlich auf jede beliebige Art erfolgen. Insbesondere ist es vorstellbar, dass die Verdichtungsvorrichtung **1** mit einem zufälligen Bewegungsalgorithmus ausgestattet ist, der beispielsweise von Staubsaugerrobotern oder Mährobotern bekannt ist. Derartige Bewegungsalgorithmen verändern eine Bewegungsrichtung der jeweiligen Vorrichtung bei jeder Kollision der Vorrichtung mit einer jeweiligen äußeren Grenze der zu bearbeitenden Fläche. Die Veränderung der Bewegungsrichtung erfolgt zufallsabhängig, wobei im statistischen Mittel die jeweils zu bearbeitende Fläche über die Zeit an jeder ihrer Stellen periodisch überstrichen wird.

Für die Verdichtung eines Untergrundes ist ein derartiger Bewegungsalgorithmus grundsätzlich denkbar, gleichwohl mit erheblichen Nachteilen behaftet. Insbesondere kann es dazu kommen, dass einzelne Stellen der zu bearbeitenden Fläche 3 deutlich häufiger überstrichen werden als andere Stellen und infolgedessen eine Überverdichtung auftreten kann. Ferner ist die Dauer der gesamten Bearbeitung der jeweiligen Fläche unter Verwendung eines zufälligen Bewegungsalgorithmus deutlich erhöht, was für die Anwendung einer Verdichtungsvorrichtung 1 einen deutlich höheren Verbrauch von Betriebsstoffen sowie einen höheren Verschleiß der einzelnen Komponenten der Verdichtungsvorrichtung 1 bedeutet. Daher besteht ein Interesse daran, die jeweils zu bearbeitende Fläche 3 des zu verdichtenden Untergrundes 2 möglichst effizient und zügig zu bearbeiten.

Hierzu wird in dem gezeigten Beispiel ein Bewegungsalgorithmus vorgeschlagen, der eine Überstreichung der zu bearbeitenden Fläche 3 in einer regelmäßigen Art und Weise vornimmt. Insbesondere wird die zu bearbeitende Fläche 3 mittels der Verdichtungsvorrichtung 1 ringförmig bearbeitet, nämlich von außen nach innen. Dies ergibt sich besonders gut anhand der Darstellung gemäß **Figur 2****.** Der zugehörige Bewegungsalgorithmus steuert die Verdichtungsvorrichtung 1 in ihrem Autonombetrieb derart, dass sie sich jeweils an der vorhergehenden Arbeitsbahn orientiert. Die "erste Arbeitsbahn", die entlang der äußeren Grenze **4** verläuft, fährt die Verdichtungsvorrichtung **1** durch Orientierung entlang der äußeren Grenze **4** ab. In dem gezeigten Beispiel ist die Bestimmung der äußeren Grenze **4** bereits durch ein Überstreichen derselben mittels der Verdichtungsvorrichtung **1** erfolgt. Dies ist zwar von besonderem Vorteil, für den Erfolg des erfindungsgemäßen Verfahrens jedoch nicht zwingend notwendig. Insbesondere ist es alternativ vorstellbar, die äußere Grenze **4** beispielsweise durch manuelles Abschreiten mit einer Positionsbestimmungseinrichtung zu erfassen und infolgedessen festzulegen.

Die Überstreichung der einzelnen Arbeitsbahnen der Verdichtungsvorrichtung **1** erfolgt in dem gezeigten Beispiel unter Anwendung eines Überlappungsmaßes **10.** Dieses Überlappungsmaß **10** weist hier eine Breite von 40 cm auf, um die sich jede nachfolgende Arbeitsbahn mit der jeweils vorhergehenden Arbeitsbahn überlappt. Die Folge dieser Überlappung besteht darin, dass eine Breite **13** zweier Arbeitsbahnen geringer ist als die Summe von zwei Arbeitsbreiten 9 der Verdichtungsvorrichtung **1.** Das Vorsehen eines

Überlappungsmaßes **10** ist unter anderem dem Umstand geschuldet, dass heutige Positionsbestimmungseinrichtungen mit einem nicht vernachlässigbarer Messfehler behaftet sind. Selbst bei Verwendung einer aufwendigen Positionsbestimmungseinrichtung bewegt sich dieser Messfehler typischerweise in einem Bereich von 30 cm bis 50 cm. Die Berücksichtigung eines Überlappungsmaßes **10** verhilft folglich dazu, ein versehentliches Auslassen einzelner Stellen der zu bearbeitenden Fläche **3** im Zuge des Autonombetriebs der Verdichtungsvorrichtung **1** zu vermeiden.

In ihrem Autonombetrieb fährt die Verdichtungsvorrichtung **1** nunmehr die zu bearbeitende Fläche **3** systematisch ringförmig von außen nach innen entlang von Arbeitsbahnen **12** ab, bis sie schließlich einen Endpunkt **11** erreicht. Sobald sie den Endpunkt **11** erreicht, meldet die Verdichtungsvorrichtung **1** die vollständige Bearbeitung der zu bearbeitenden Fläche an die jeweils zuständige Person. Erst zu diesem Zeitpunkt ist ein weiteres Eingreifen der die Verdichtungsvorrichtung **1** bedienenden Person notwendig.

Vorteilhafterweise ist die Verdichtungsvorrichtung **1** mit mindestens einer Messeinrichtung ausgestattet, die sie erlaubt, Bodenparameter des zu verdichtenden Untergrundes **2** zu erheben, insbesondere selbsttätig während des Autonombetriebs. Beispielsweise kann eine derartige Messeinrichtung dazu geeignet sein, die Bodensteifigkeit des zu bearbeiten Untergrundes **2** an einer jeweiligen Messstelle zu erheben. Der Bewegungsalgorithmus der Verdichtungsvorrichtung **1** ist bei einer derartigen Ausführung vorteilhafterweise so konzipiert, dass die Verdichtungsvorrichtung **1** selbstständig einen Vergleich eines jeweilig erhobenen Messwertes des zu bearbeitenden Untergrundes **2** mit einem zuvor definierten Grenzwert vornimmt und in Abhängigkeit dieses Vergleichs eine mehrfache Überstreichung der jeweiligen Stelle vornehmen kann. Auf diese Weise ist die Möglichkeit gegeben, den Autonombetrieb der Verdichtungsvorrichtung **1** nicht lediglich an einer vollständigen Überstreichung sämtlicher Stellen der zu bearbeitenden Fläche **3** auszurichten, sondern sogar in Abhängigkeit des Bearbeitungsergebnisses zu orientieren. Dies hat den erheblichen Vorteil, dass nach Meldung der Verdichtungsvorrichtung **1,** dass die zu bearbeitende Fläche vollständig bearbeitet ist, tatsächlich mit gutem Grund davon ausgegangen werden darf, dass die zu bearbeitende Fläche in hinreichender Qualität verdichtet wurde.

Es versteht sich, dass die vorstehend beschriebenen Merkmale des erfindungsgemäßen Verfahrens grundsätzlich unabhängig voneinander verwirklicht werden können, sofern dies dem Fachmann technisch möglich erscheint. Die einzelnen Merkmale des erfindungsgemäßen Verfahrens sind folglich nicht auf die Kombination im Zusammenhang mit dem hier vorgestellten Ausführungsbeispiel eingeschränkt.

### Bezugszeichenliste

- 1: Verdichtungsvorrichtung
- 2: Untergrund
- 3: Zu bearbeitende Fläche
- 4: Äußere Grenze
- 5: Strecke
- 6: Polygonzug
- 7: Geradliniger Abschnitt
- 8: Punkt
- 9: Arbeitsbreite
- 10: Überlappungsmaß
- 11: Endstelle
- 12: Arbeitsbahn
- 13: Breite

## Patentansprüche

1. Verfahren zum autonomen Betrieb einer Verdichtungsvorrichtung (1) zur Verdichtung eines Untergrundes (2), umfassend die folgenden Verfahrensschritte:
a) Eine zu bearbeitende Fläche (3) des zu verdichtenden Untergrundes (2) wird ausgewählt.
b) Die Verdichtungsvorrichtung (1) und/oder zumindest ein Teil der zu bearbeitenden Fläche (3) werden derart präpariert, dass die Verdichtungsvorrichtung (1) zumindest in einem Autonombetrieb selbsttätig die zu bearbeitenden Fläche (3) bearbeitet und im Zuge dessen zumindest im Wesentlichen jede Stelle der zu bearbeitenden Fläche (3) mindestens einmal überstreicht.
c) Eine Positionsbestimmungseinrichtung wird entlang einer Strecke (5) geführt, die zumindest einen Teil einer äußeren Grenze (4) der zu bearbeitenden Fläche (3) repräsentiert, wobei während der Führung der Positionsbestimmungseinrichtung entlang der Strecke (5) mittels der Positionsbestimmungseinrichtung zumindest intermittierend Positionsdaten erfasst werden.
d) Unter Zuhilfenahme erfasster Positionsdaten der Strecke (5) wird eine elektronische Information über die Lage der äußeren Grenze (4) der zu bearbeitenden Fläche (3) erzeugt.
e) Die Verdichtungsvorrichtung (1) wird mit der elektronischen Information versorgt, sodass sie dazu befähigt wird, in ihrem Autonombetrieb selbsttätig bei einer Kollision mit der äußeren Grenze (4) ihre Fahrtrichtung derart anzupassen, dass sie zumindest im Wesentlichen auf der zu bearbeitenden Fläche (3) verbleibt,
**gekennzeichnet durch** den folgenden Verfahrensschritt:
f) Die Strecke wird von einer Person manuell abgeschritten, wobei die Person die Positionsbestimmungseinrichtung trägt und entlang der Strecke (5) führt.

2. Verfahren nach Anspruch 1, **dadurch gekennzeichnet, dass** die Positionsbestimmungseinrichtung nach Abschluss des manuellen Abschreitens der Strecke (5) an die Verdichtungsvorrichtung (1) angeschlossen wird.

3. Verfahren nach Anspruch 1 oder 2, **dadurch gekennzeichnet, dass** die Strecke (5), entlang derer die Positionsbestimmungseinrichtung während der Erfassung der Positionsdaten geführt wird, in sich geschlossen ist bzw. wird.

4. Verfahren nach einem der Ansprüche 1 bis 3, **dadurch gekennzeichnet, dass** mittels der erfassten Positionsdaten der Strecke (5) ein Polygonzug (6) erzeugt wird, der aus einer Mehrzahl geradliniger Abschnitte (7) zusammengesetzt ist, die sich vorzugsweise zwischen Positionsdaten erfasster Punkte (8) ergeben, die im Zuge der Führung der Positionsbestimmungseinrichtung (1) entlang der Strecke (5) erfasst wurden.

5. Verfahren nach einem der Ansprüche 1 bis 4, **dadurch gekennzeichnet, dass** eine Position der Verdichtungsvorrichtung (1) während ihres Autonombetriebs zumindest zeitweise mittels mindestens einer Positionsbestimmungseinrichtung und mindestens eines elektronischen Kompasses bestimmt wird.

6. Verfahren nach einem der Ansprüche 1 bis 5, **dadurch gekennzeichnet, dass** die Verdichtungsvorrichtung (1) in ihrem Autonombetrieb die zu bearbeitende Fläche (3) zumindest zeitweise, vorzugsweise vollständig, ringförmig bearbeitet, vorzugsweise von außen nach innen.

7. Verfahren nach Anspruch 6, **dadurch gekennzeichnet, dass** die Verdichtungsvorrichtung (1) nach erstmaliger Kollision mit der äußeren Grenze (4) der zu bearbeitenden Fläche (3) letztere systematisch von außen nach innen abfährt.

8. Verfahren nach einem der Ansprüche 1 bis 7, **dadurch gekennzeichnet, dass** die Verdichtungsvorrichtung (1) in ihrem Autonombetrieb die zu bearbeitende Fläche (3) zumindest zeitweise, vorzugsweise vollständig, streifenweise entlang zueinander paralleler Fahrstreifen bearbeitet.

9. Verfahren nach einem der Ansprüche 1 bis 8, **dadurch gekennzeichnet, dass** die Verdichtungsvorrichtung (1) in ihrem Autonombetrieb mit einem Überlappungsmaß (10) von mindestens 10 cm, vorzugsweise mindestens 20 cm, weiter vorzugsweise mindestens 30 cm, betrieben wird, sodass trotz Vorliegen eventueller Ungenauigkeit mittels einer Positionsbestimmungseinrichtung der Verdichtungsvorrichtung (1) erfasster Positionsdaten sichergestellt ist, dass zumindest im Wesentlichen jede Stelle der zu bearbeitenden Fläche (3) überstrichen wird.

10. Verfahren nach einem der Ansprüche 1 bis 9, **dadurch gekennzeichnet, dass** die Verdichtungsvorrichtung (1) während ihres Autonombetriebs selbsttätig mindestens einen Verdichtungsparameter des Untergrundes (2) erhebt, wobei die Verdichtungsvorrichtung (1) sämtliche Stellen der zu bearbeitenden Fläche (3), in denen der Verdichtungsparameter einen gesetzten Grenzwert nicht erreicht, selbsttätig mindestens ein weiteres Mal überstreicht, vorzugsweise sooft, bis an sämtlichen Stellen der zu bearbeitenden Fläche (3) der Verdichtungsparameter den Grenzwert erreicht hat.

## Claims

1. Method for the autonomous operation of a compaction device (1) for compaction of a substrate (2), comprising the following process steps:
a) A surface (3) of the substrate to be compacted (2) is selected.
b) The compaction device (1) and/or at least part of the surface to be processed (3) is/are prepared in such a way that the compaction device (1) automatically processes the surface to be processed (3) at least during autonomous operation and, in the course of this, at least essentially sweeps over each area of the surface (3) to be processed at least once.
c) A positioning device is guided along a route (5) representing at least one part of an outer boundary (4) of the surface to be processed (3), wherein position data are captured along the route (5) by means of the positioning device at least intermittently during the guiding process of the positioning device.
d) With the aid of captured position data of the route (5), electronic information on the position of the outer boundary (4) of the area to be processed (3) is generated.
e) The compaction device (1) is supplied with the electronic information so that it is enabled to automatically adjust its direction of travel during its autonomous operation in the event of a collision with the outer boundary (4) in such a way that it at least essentially remains on the surface to be processed (3),
**characterized by** the following method step:
f) The route is manually paced off by one person, wherein the person carries the positioning device and guides it along the route (5).

2. Method according to Claim 1, **characterized in that** the positioning device is connected to the compaction device (1) after completion of the manually pacing off the route (5).

3. Method according to Claim 1 or 2, **characterized in that** the route (5) along which the positioning device is guided when capturing the position data is or will be closed off within itself.

4. Method according to one of Claims 1 to 3, **characterized in that**, by means of the captured position data of the route (5), a traverse (6) is generated, which consists of a plurality of straight sections (7), which preferably result between points (8) captured between position data that are captured along the route (5) during the course of the guiding process of the positioning device (1).

5. Method according to one of Claims 1 to 4, **characterized in that** a position of the compaction device (1) is determined at least temporarily during its autonomous operation by means of at least one positioning device and at least one electronic compass.

6. Method according to one of Claims 1 to 5, **characterized in that** the compaction device (1) processes the surface to be processed (3) in a ringshaped manner, preferably from the outside in, during its autonomous operation at least temporarily, preferably completely.

7. Method according to Claim 6, **characterized in that** the compaction device (1), after the first collision with the outer boundary (4) of the surface to be processed (3), systematically drives along the latter from the outside in.

8. Method according to one of Claims 1 to 7, **characterized in that** the compaction device (1) processes the surface to be processed (3) during its autonomous operation in strips along lanes that are parallel to one another, preferably from the outside in, at least temporarily, preferably completely.

9. Method according to one of Claims 1 to 8, **characterized in that** the compaction device (1) is operated autonomously with an overlap measurement (10) of at least 10 cm, preferably at least 20 cm, being furthermore preferred, at least 30 cm, so that despite the presence of a possible inaccuracy of the position data captured by means of a positioning device of the compaction device (1), it is ensured that each portion of the area to be processed (3) is at least essentially swept over.

10. Method according to one of Claims 1 to 9, **characterized in that** the compaction device (1) automatically collects at least one compaction parameter of the substrate (2) during its autonomous operation, wherein the compaction device (1) sweeps over all areas of the surface to be processed (3) automatically at least one more time where the compaction parameter does not reach a set limit value, preferably as often as necessary until the compaction parameter has reached the limit value at all areas of the surface (3) to be processed.

## Revendications

1. Procédé destiné à faire fonctionner de façon autonome un dispositif de compactage (1) pour compacter un sol (2), comprenant les étapes de procédé suivantes :
a) sélection d'une surface à traiter (3) du sol à compacter (2),
b) préparation du dispositif de compactage (1) et/ou au moins d'une partie de la surface à traiter (3) de telle manière que le dispositif de compactage (1) traite au moins automatiquement dans un fonctionnement autonome la surface à traiter (3) et au cours duquel au moins pour l'essentiel chaque emplacement de la surface à traiter (3) est couvert au moins une fois,
c) guidage d'un système de détermination de position le long d'un parcours (5), qui représente au moins une partie d'une limite extérieure (4) de la surface à traiter (3), sachant que pendant le guidage du système de détermination de position le long du parcours (5) des données de position sont saisies au moins de façon intermittente au moyen du système de détermination de position,
d) production d'une information électronique concernant la position de la limite extérieure (4) de la surface à traiter (3) à l'aide des données de position saisies du parcours (5),
e) alimentation du dispositif de compactage (1) avec l'information électronique de telle manière qu'il est capable d'adapter automatiquement sa direction de marche pendant son fonctionnement autonome lors d'une collision avec la limite extérieure (4) de telle manière qu'il reste au moins pour l'essentiel sur la surface à traiter (3),
**caractérisé par** l'étape de procédé suivante :
f) le parcours est arpenté manuellement par une personne, sachant que la personne porte le dispositif de détermination de position et passe le long du parcours (5).

2. Procédé selon la revendication 1, **caractérisé en ce que** le système de détermination de position est raccordé au dispositif de compactage (1) après expiration de l'arpentage manuel du parcours (5).

3. Procédé selon la revendication 1 ou 2, **caractérisé en ce que** le parcours (5), le long duquel le système de détermination de position est guidé pendant la saisie des données de position, est ou sera fermé sur lui-même.

4. Procédé selon l'une quelconque des revendications 1 à 3, **caractérisé en ce qu'**au moyen des données de position saisies du parcours (5), un tracé polygonal (6) est produit, qui est composé d'une pluralité de sections linéaires (7), qui résultent de préférence entre des données de position des points saisis (8), qui ont été saisis au cours du guidage du système de détermination de position (1) le long du parcours (5).

5. Procédé selon l'une quelconque des revendications 1 à 4, **caractérisé en ce qu'**une position du dispositif de compactage (1) pendant son fonctionnement autonome est déterminée au moins par intermittence au moyen d'au moins un système de détermination de position et au moins d'une boussole électronique.

6. Procédé selon l'une quelconque des revendications 1 à 5, **caractérisé en ce que** le dispositif de compactage (1) dans son fonctionnement autonome, traite la surface à traiter (3) en forme d'anneau, au moins par intermittence, de préférence complètement, de préférence de l'extérieur vers l'intérieur.

7. Procédé selon la revendication 6, **caractérisé en ce que** le dispositif de compactage (1) après la première collision avec la limite extérieure (4) de la surface à traiter (3) quitte cette dernière systématiquement de l'extérieur vers l'intérieur.

8. Procédé selon l'une quelconque des revendications 1 à 7, **caractérisé en ce que** le dispositif de compactage (1) travaille dans son fonctionnement autonome la surface à traiter (3) au moins par intermittence, de préférence complètement, par bandes le long de bandes de circulation parallèles les unes aux autres.

9. Procédé selon l'une quelconque des revendications 1 à 8, **caractérisé en ce que** le dispositif de compactage (1) est utilisé dans son fonctionnement autonome avec une mesure de chevauchement (10) d'au moins 10 cm, de préférence d'au moins 20 cm, de préférence encore d'au moins 30 cm, de telle sorte que malgré l'existence d'une imprécision éventuelle des données de position saisies, il est assuré au moyen d'un système de détermination de position du dispositif de compactage (1) qu'au moins pour l'essentiel chaque emplacement de la surface à traiter (3) est couvert.

10. Procédé selon l'une quelconque des revendications 1 à 9, **caractérisé en ce que** le dispositif de compactage (1) pendant son fonctionnement autonome augmente automatiquement au moins un paramètre de compactage du sol (2), sachant que le dispositif de compactage (1) couvre automatiquement au moins une autre fois tous les emplacements de la surface à traiter (3), dans lesquels le paramètre de compactage n'atteint pas une valeur limite fixée, de préférence autant de fois jusqu'à ce que le paramètre de compactage ait atteint la valeur limite sur tous les emplacements de la surface à traiter (3).
